# EUROPÄISCHE PATENTSCHRIFT

(11) **EP 1 110 783 B1**
(45) Veröffentlichungstag und Bekanntmachung des Hinweises auf die Patenterteilung: **15.11.2006**
(21) Anmeldenummer: 00127422.4
(22) Anmeldetag: 14.12.2000
(51) Int. Cl.: B60J 7/12

(54) **Cabriolet-Fahrzeug mit einem auffaltbaren Dach**
Convertible vehicle provided with a folding up roof
Véhicule convertible équipé avec un toit repliable

(30) Priorität: 24.12.1999 DE 19963149
(43) Veröffentlichungstag der Anmeldung: 27.06.2001
(73) Patentinhaber: Wilhelm Karmann GmbH, 49084 Osnabrück (DE)
(72) Erfinder: Maass, Joachim, 49143 Bissendorf (DE)
(74) Vertreter: Busse & Busse Patentanwälte

(56) Entgegenhaltungen:
- DE-A- 3 808 910
- DE-A- 19 918 628
- DE-C- 3 830 393
- DE-C- 3 937 764
- DE-C- 4 423 834

## Beschreibung

Die Erfindung betrifft ein Cabriolet-Fahrzeug mit einem auffaltbarem Dach, das in geöffneter Stellung unterhalb einer Abdeckung ablegbar ist und das zumindest einen hinteren Spannbügel aufweist, der in geschlossener Stellung des Daches auf der Abdeckung aufliegt.

Verdecke mit hinteren Spannbügeln müssen beim Öffnen derart bewegt werden, daß die Spannbügel zunächst von einer Abdeckung, auf der sie bei geschlossenem Dach aufliegen, abheben und anschließend in eine Abwärtsbewegung in einem hinteren Teil des Fahrzeuges abgelegt werden können. Bei bestimmten Dachgeometrien kann zumindest ein Teilbereich des Spannbügels in geschlossener Stellung vor einem Hindernis liegen, etwa einer Stufe in der Karosserie oder einem zusätzlichen Einbauteil. Aus der DE-C 38 30 393 ist ein Cabriolet-Fahrzeug mit einem Faltverdeck der eingangs genannten Art bekannt, bei dem Faltverdeck in geschlossenem Zustand auf einer hinteren Abdeckung aufliegt. Es ist ein gemeinsamer Schwenkantrieb für einen Hauptspriegel des Faltverdeckes und einen Dachspannbügel vorgesehen. Das Faltverdeck soll aus einer in einem Verdeckkasten abgesenkten Ablagestellung in seine geschlossene Stellung überführt werden, wobei der Dachhaltebügel aus seiner Abdeckstellung mittels einer selbstätitg gesteuerten Verriegelung des Hauptspriegels gegenüber dem Aufbau in seine Endlage gebracht werden kann. Dazu sind verschiedene mechanische Elemente vorgesehen, um mit dem gemeinsamen Hauptantrieb einerseits Verriegelungen zu bewerkstelligen und andererseits auch Verriegelungen zu lösen und darüber hinaus gekoppelte Bewegungen durchführen zu können. Diese gekoppelten Bewegungen sehen vor, daß eine Drehschieberanlenkung an einem Seitenschenkel des Dachhauthaltebügels vorgesehen ist, wobei über den Schwenkantrieb der Dachhauthaltebügel karosserieseitig abgestützt und im Zuge seiner Versenkbewegung in den Verdeckkasten nach vorne verschoben werden kann. Trotz dieser sehr bauaufwendigen und verschleißanfälligen Schwenkbewegungsteile läßt sich das Verdeck nur parallel zur Fahrtrichtung des Fahrzeuges verlagern, so daß irgendwelche Hindernisse, die karosserieseitig vorgesehen sind, wie beispielsweise eine Kante einer Heckscheibe, mit diesem Faltverdeck nicht überwunden werden können.

Aus der DE-A 38 08 910 ist ein versenkbares Faltverdeck eines Kraftfahrzeuges bekannt, bei dem beim Einbringen des Faltverdeckes in den vorgesehenen Verdeckkastendeckel die Schwenkachse des Faltverdecks nach unten in das Aufnahmefach des Verdeckkastendeckels verlagert werden kann, um dieses hinsichtlich ihrer Raumkapazität besser ausnutzen zu können. Demzufolge sind auch bei diesem Faltverdeck karosserieseitige Hindernisse nicht zu überwinden.

Aus der DE-C-39 37 764 ist eine Antriebsvorrichtung für ein Cabriolet-Verdeck bekannt, bei der ein hinterer Spannbügel über Lenker einerseits insgesamt in eine Horizontalstellung verschwenkbar ist. Nach Beendigung der genannten Schwenkbewegung mittels Anschlägen ist durch das selbe Antriebsorgan dann der Spannbügel um eine feststehende Schwenkachse eines Lenkers aus der Horiziontalstellung in eine im wesentlichen vertikale Stellung verschwenkbar. Damit sind zwei Schwenkbewegungen nacheinander ausgeführt, die ohne weitere Freigangmechanismen mit unterschiedlichen Sperrichtungen von nur einem Antriebsorgan bewirkt werden können. Aufgrund der nacheinander ablaufenden Schwenkbewegungen werden jeweils Kreisbahnen um die die Schwenkachsen ausbildenden Gelenke durch den Spannbügel beschrieben. Auch diese Ausführung ist sehr bauaufwendig und damit verschleißanfällig, kann jedoch nicht bewirken, daß karosserieseitige Hindernisse überwunden werden können.

Der Erfindung liegt die Aufgabe zugrunde, ein Cabriolet-Fahrzeug der eingangs genannten Art zu schaffen, das in der Lage ist, auch bei vorgesehenen karosserieseitigen Hindernissen einen kollisionsfreien und zuverlässigen Öffnungs- und Schließmechanismus bereitzustellen.

Die Erfindung löst dieses Problem mit den Merkmalen des Anspruchs 1. Hinsichtlich weiterer vorteilhafter Ausgestaltungen der Erfindung wird auf die Ansprüche 2 bis 12 verwiesen.

Dadurch, daß die Öffnungsbewegung der Spannbügel eine Hub-/SchwenkBewegung ist, mit Bewegungskomponenten, die sowohl die Schwenkbewegung als auch eine Anhebe- und Absenkbewegung mit einschließen, kann der Spannbügel über ein Hindernis hinweggehoben werden, so daß beispielsweise eine Schwenkachse, um die herum die Spannbügel schwenkbar sind und die unterhalb einer karosserieseitigen Stufe liegt, als Ganzes über das Hindernis während der Dachöffnung geführt werden kann.

Wenn das Dach als sogenanntes Finnenverdeck mit zwei in Draufsicht im wesentlichen dreiecksförmigen Spannbügeln ausgebildet ist, so können diese über einen stabilitätsvergrößernden Querverbinder miteinander verbunden werden, und der Querverbinder, beispielsweise ein Rohr oder dergleichen, kann insgesamt derart unterhalb der Fensterbrüstungslinie gehalten sein, daß er im geschlossenen Zustand des Daches nicht sichtbar ist. Dennoch kann mittels der erfindungsgemäßen Hub-Schwenk-Bewegung der Querverbinder über ein karosserieseitiges Hindernis gehoben werden. Dieses ist insbesondere vorteilhaft, wenn eine absenkbare Heckscheibe vorgesehen ist, die in einem karosserieseitigen Modul halterbar ist. Mit der erfindungsgemäßen Lösung können dann die seitlichen Spannbügel mit dem Querverbinder über die Oberkante des Moduls kollisionsfrei hinwegbewegt werden.

Weitere Vorteile und Einzelheiten ergeben sich aus einem in der Zeichnung dargestellten Ausführungsbeispiel des Gegenstandes der Erfindung. In der Zeichnung zeigt:

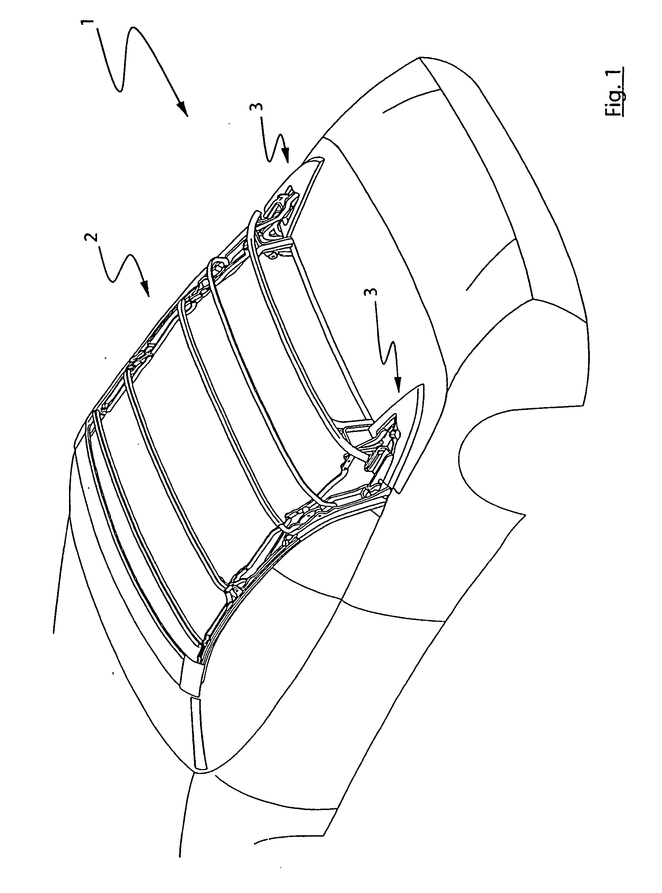

- Fig. 1: ein erfindungsgemäßes Cabriolet-Fahrzeug in schematisierter Seitenansicht,
- Fig. 2: eine Detailansicht der Gestängeteile, im wesentlichen entsprechend dem Ausschnitt II in Fig. 1,
- Fig. 3: eine ähnliche Ansicht wie Fig. 2 während der Öffnung der Spannbügel,

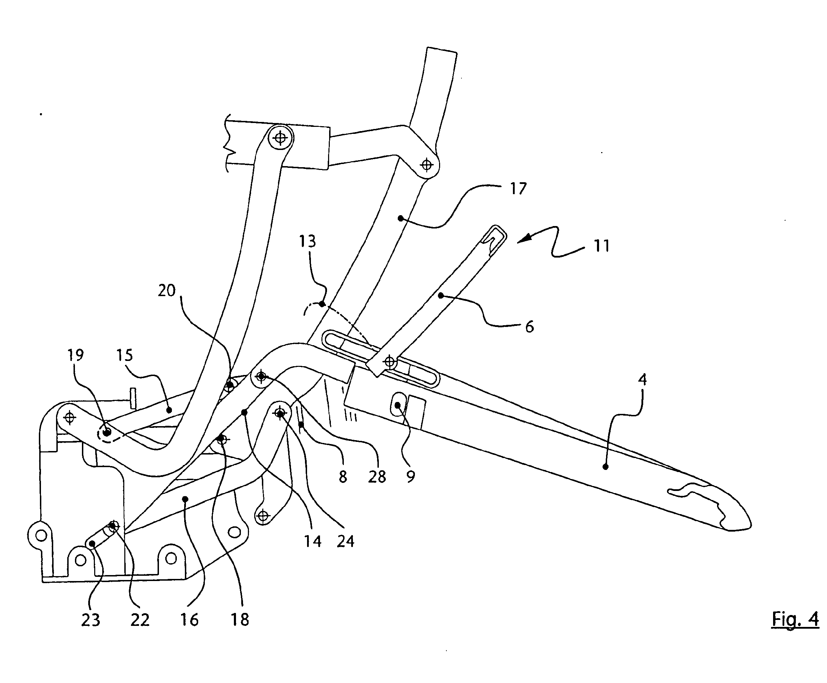

- Fig. 4: eine ähnliche Ansicht wie Fig. 3 während der weiter fortschreitenden Dachöffnung,

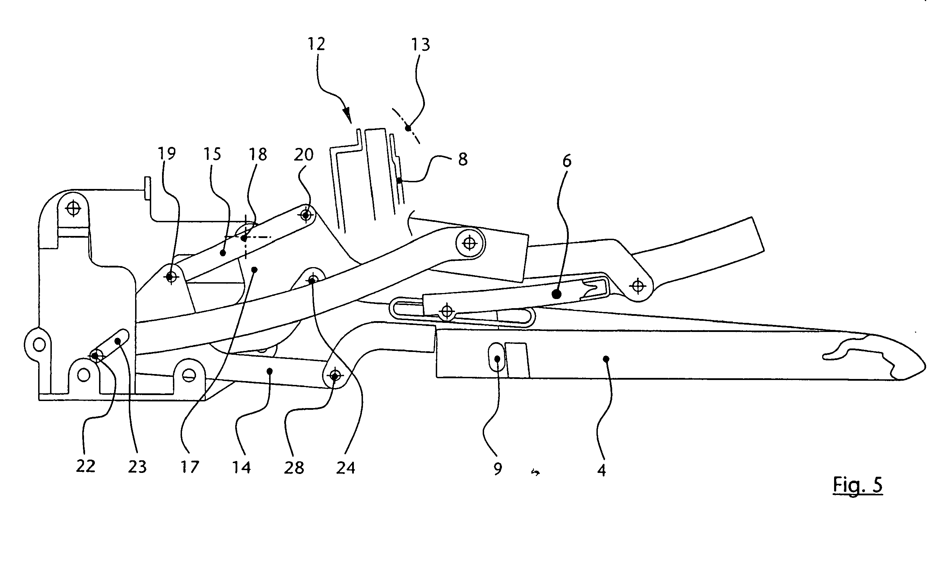

- Fig. 5: eine ähnliche Ansicht wie Fig. 4 bei vollständig abgelegtem Dach,

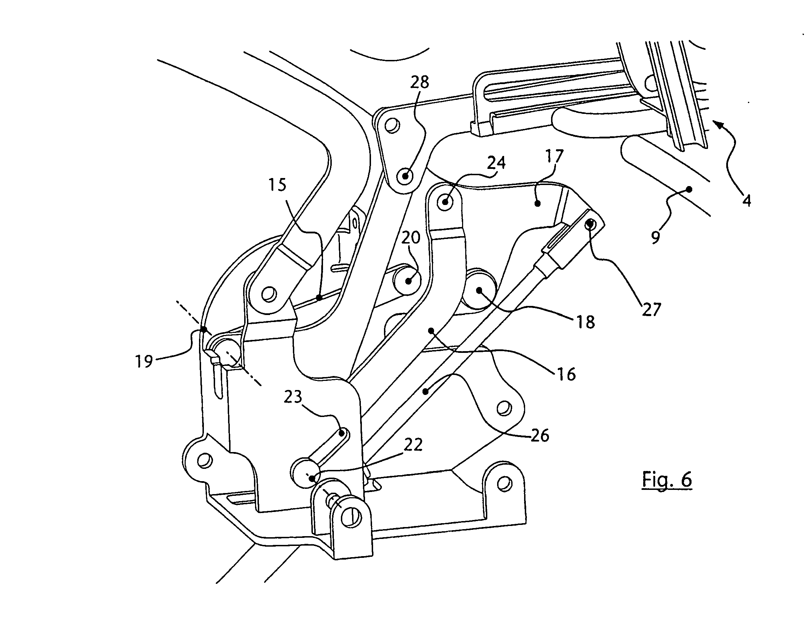

- Fig. 6: die Gestängeteile nach Fig. 2 in geschlossener Ausgangsstellung,

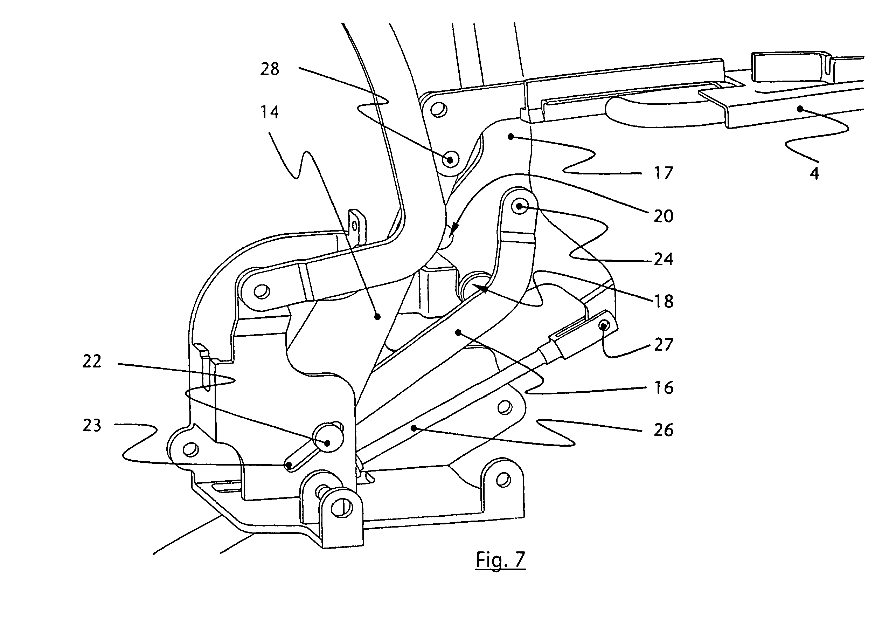

- Fig. 7: die Gestängeteile in der Lage nach Fig. 3,

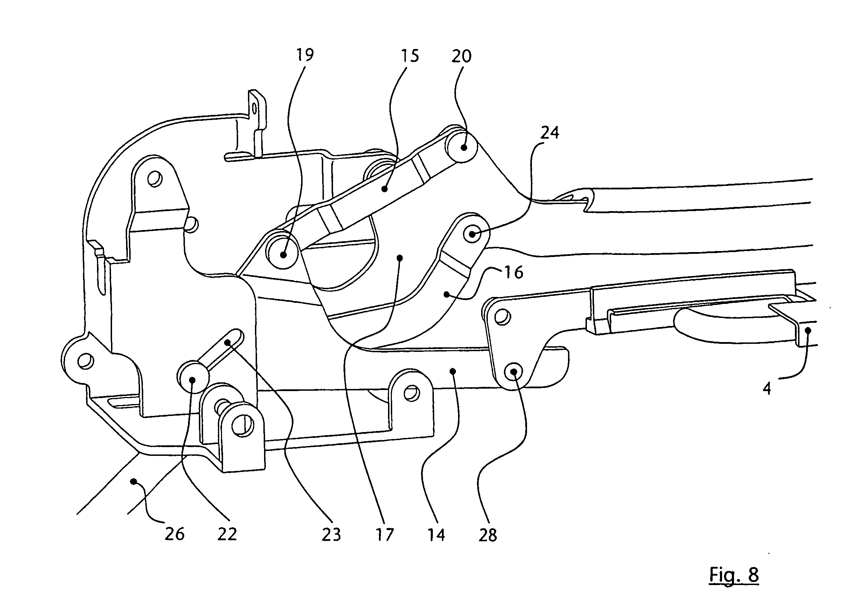

- Fig. 8: die Gestängeteile in der Lage nach Fig. 5.

Gemäß dem Ausführungsbeispiel weist das dargestellte Cabriolet-Fahrzeug 1 ein Dach 2 auf, das in seitlichen, dreiecksförmigen Endbereichen 3 nach hinten ausläuft. Diese Endbereiche 3 sind unterstützt durch Spannbügel 4, sogenannten Finnen, mit denen das Dach 2 gegenüber einer rückwärtigen Abdeckung 5 spannbar ist. Das Dach 2 kann vollständig oder teilweise als flexibles, textiles Verdeck ausgebildet sein. Die Spannbügel 4 liegen in geschlossener Stellung des Daches 2 auf der Abdeckung 5 auf und müssen, um ein Öffnen der Abdeckung zu ermöglichen, von dieser abgehoben werden. Bei geöffneter Abdeckung 5 ist dann das Dach 2 mit den rückwärtigen Spannbügeln 4 insgesamt in einen Karosseriebereich ablegbar, in dem es von der Abdeckung 5 überdeckt werden kann.

Den hinteren Spannbügeln 4 ist eine Heckscheibe 6 vor- und zwischengeordnet, die insgesamt in geschlossener Stellung des Daches separat geöffnet werden kann, wobei sie dann in Absenkstellung 7 in einem karosserieseitigen, kastenförmigen Aufnahmeteil 8 aufgenommen ist.

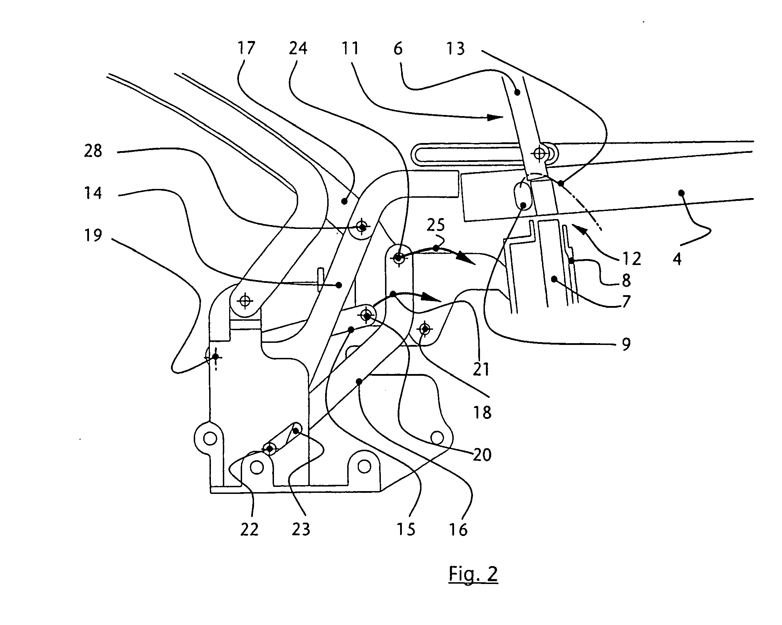

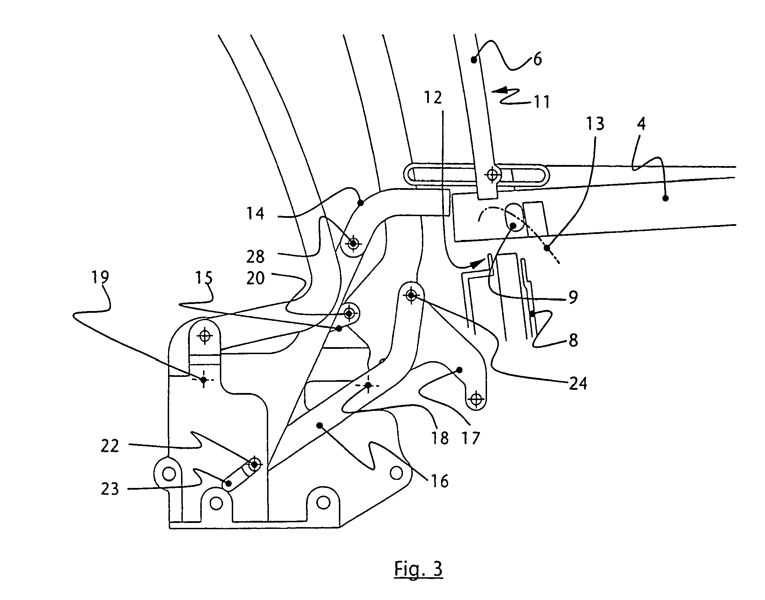

Die Spannbügel 4 sind über einen Querverbinder 9, beispielsweise ein Rohr, miteinander verbunden, um dadurch die Dachstabilität zu erhöhen. Der Querverbinder 9 muß bei der Öffnung der Spannbügel (Fig. 2 und 3) durch einen Zwischenbereich 10 zwischen einem Dachrahmenteil 11 und der Oberkante 12 des karosserieseitigen Aufnahmeteils 8 hindurchtreten.

Um diesen Durchgang zu ermöglichen, wird für die Dachöffnung der Querverbinder 9, der mit den Spannbügeln 4 fest verbunden ist, auf der Bewegungsbahn 13 geführt, die eine überlagerte Bewegungsbahn zwischen einer Schwenk- und einer Hubbewegung ist. Um die optische Unsichtbarkeit des verbindenden Rohrs 9 im geschlossenen Zustand des Daches 2 sicherzustellen, ist dieses dann unterhalb einer Ebene der Abdeckung 5 gehalten. Entsprechend seiner niedrigen Lage muß es zur Öffnung des Daches zunächst angehoben werden, um die Oberkante 12 des Aufnahmeteils 8 überwinden zu können.

Zur Ermöglichung der kombinierten Bewegungsbahn 13 sind die seitlichen Spannbügel 4 schwenkbar an seitlichen Steuerstangen 14 gehalten, die ihrerseits jeweils über einen Zwischenlenker 15 und einen zweiten Zwischenlenker 16 mit dem hinteren Dachrahmenteil 17 verbunden sind. Das hintere Dachrahmenteil 17 begrenzt einen rückwärtigen Verdeckteil seitlich und ist um ein karosserieseitiges Hauptlager 18 schwenkbar, wobei das Hauptlager 18 eine ortsfeste Lage in der Karosserie einnimmt. Zur Verschwenkung dient ein Antriebsorgan 26, beispielsweise ein Hydraulikzylinder, der an einer Achse 27 mit dem Dachrahmenteil 17 verbunden ist. Der erste Zwischenlenker 15 ist einenends an einer Gelenkachse 19 mit der Steuerstange 14 und anderenends an einer weiteren Schwenkachse 20 mit dem Dachrahmenteil 17 verbunden. Durch Aufschwenken dieses Dachrahmenteils 17 wird auf die Schwenkachse 20 eine Zugbewegung in Richtung des Pfeils 21 ausgeübt, dadurch wird in gleicher Weise die Gelenkachse 19 der Steuerstange 14 mitbewegt, hierüber also eine Schwenkbewegung der Steuerstange 14 vermittelt.

Weiterhin ist die Steuerstange 14 mit einer unteren Gelenkachse 22 in einer als Langloch ausgebildeten Kulisse 23 gelagert. Koaxial zur Gelenkachse 22 ist der zweite Zwischenlenker 16 an der Steuerstange 14 angelenkt. Anderenends ist der Zwischenlenker 16 an der Gelenkachse 24 ebenfalls an dem hinteren Dachrahmenteil 17 schwenkbar gelagert. Über das Aufschwenken des hinteren Rahmenteils 17 um das Hauptlager 18 wird eine Zugbewegung auf die Schwenkachse 24 in Richtung des Pfeils 25 ausgeübt, wodurch der zweite Zwischenlenker 16 mit seinem gegenüberliegenden Ende die Anlenkachse 22 der Steuerstange 14 in der Kulisse 23 aufwärts bewegt. Aus der Überlagerung der genannten Bewegungen entsteht die Bewegungsbahn 13.

Die Steuerstangen 14 sind karosserieseitig nicht ortsfest gehalten, sondern lediglich über die beiden Zwischenlenker 15 und 16 mit dem hinteren Dachrahmenteil 17 verbunden. Das den Gelenkachsen 19 und 22 gegenüber gelegene Ende der Steuerstange 14 ist am Gelenk 28 schwenkbar mit dem hinteren Spannbügel 4 und dem Querverbinder 9 verbunden. Insgesamt ist die Steuerstange 14 schwanenhalsähnlich ausgebildet, so daß sie an ihrem karosserieseitigen Ende die beabstandete Lagerung der Gelenkachsen 19 und 22 ermöglicht und einen ausgreifenden Halsbereich zu den hinteren Spannbügeln 4 umfaßt.

## Patentansprüche

1. Cabriolet-Fahrzeug (1) mit einem auffaltbaren Dach (2), das in geöffneter Stellung unterhalb einer Abdeckung ablegbar ist und das zumindest einen hinteren Spannbügel (4) aufweist, der in geschlossener Stellung des Daches auf der Abdeckung aufliegt, **dadurch gekennzeichnet, daß** die Öffnungsbewegung des Daches (2) eine kombinierte Hub-/Schwenkbewegung des Spannbügels (4) entlang einer Anhebe-, Absenk- und überlagerten Schwenkkomponenten aufweisenden Bewegungsbahn (13) umfaßt.

2. Cabriolet-Fahrzeug nach Anspruch 1, **dadurch gekennzeichnet, daß** die Bewegungsbahn (13) in ihrem in Fahrtrichtung vorderen Bereich Anhebe-, Absenk- und Schwenk komponenten aufweist.

3. Cabriolet-Fahrzeug nach Anspruch 1 oder 2, **dadurch gekennzeichnet, daß** die Spannbügel (4) im wesentlichen in Draufsicht dreiecksförmig gestaltet sind.

4. Cabriolet-Fahrzeug nach einem der Anspruche 3, **dadurch gekennzeichnet, daß** die Spannbügel (4), über einen Querverbinder (9) mit einander verbunden sind.

5. Cabriolet-Fahrzeug nach Anspruch 4, **dadurch gekennzeichnet, daß** die Spannbügel (4) mit dem Querverbinder (9) fest verbunden sind und der Querverbinder (9) auf der Bewegungsbahn (13) geführt ist.

6. Cabriolet-Fahrzeug nach einem der Ansprüche 4 oder 5, **dadurch gekennzeichnet, daß** den Spannbügeln (4) eine Heckscheibe (6) vor- und zwischengeordnet ist.

7. Cabriolet-Fahrzeug nach Anspruch 6, **dadurch gekennzeichnet, daß** der Querverbinder (9) in geschlossener Stellung des Daches unterhalb der Ebene der Abdeckung (5) gehalten ist.

8. Cabriolet-Fahrzeug nach einem der Ansprüche 6 oder 7, **dadurch gekennzeichnet, daß** die Heckscheibe (6) bei geschlossenem Zustand des Daches (2) in eine geöffnete Absenkstellung verbringbar ist, in der sie in einem karosserieseitigen, kastenförmigen Aufnahmeteil (8) aufgenommen ist, wobei der Querverbinder (9) in geschlossener Stellung des Daches zumindest teilweise in Fahrtrichtung (F) vor der Oberkante (12) des Aufnahmeteils (8) gehalten ist.

9. Cabriolet-Fahrzeug nach einem der Ansprüche 1 bis 8, **dadurch gekennzeichnet, daß** der oder die Spannbügel (4) mit seitlichen Steuerstangen (14) verbunden sind, die frei von einer ortsfesten Lagerung gehalten sind.

10. Cabriolet-Fahrzeug nach Anspruch 9, **dadurch gekennzeichnet, daß** die Steuerstange (14) zur Vermittlung der Schwenkbewegung über einen Zwischenlenker (15) mit einem gegenüber einem seitlichen Hauptlager (18) schwenkbaren Dachrahmenteil (17) verbunden ist.

11. Cabriolet-Fahrzeug nach einem der Ansprüche 9 oder 10, **dadurch gekennzeichnet, daß** die Steuerstange (14) zur Vermittlung der Hubbewegung in eine Langlochkulissenführung (23) gelagert ist.

## Claims

1. Convertible vehicle (1) having foldable roof (2) which, in the lowered position, can be stowed underneath a cover and which has at least one rear tensioning bow (4) which rests on the cover when the roof is in the raised position, **characterised in that** the movement by which the roof (2) is raised comprises a combined lifting/pivoting movement of the tensioning bow (4) along a path of movement (13) having raising, lowering and superimposed pivoting components.

2. Convertible vehicle according to claim 1, **characterised in that** the path of movement (13) has raising, lowering and pivoting components in its part which is at the front in the direction of travel.

3. Convertible vehicle according to claim 1 or 2, **characterised in that** the tensioning bows (4) are substantially triangular in form when seen in plan.

4. Convertible vehicle according to one of claim 3, **characterised in that** the tensioning bows (4) are connected together by means of a transverse connector (9).

5. Convertible vehicle according to claim 4, **characterised in that** the tensioning bows (4) are solidly connected to the transverse connector (9) and the transverse connector (9) is guided along the path of movement (13).

6. Convertible vehicle according to either of claims 4 and 5, **characterised in that** the tensioning bows (4) have a rear window (6) arranged in front of and between them.

7. Convertible vehicle according to claim 6, **characterised in that**, when the roof is in the raised position, the transverse connector (9) is held below the plane of the cover (5).

8. Convertible vehicle according to either of claims 6 and 7, **characterised in that**, when the roof (2) is in the raised state, the rear window (6) can be brought to an open, lowered position in which it is received in a box-like receiving part (8) associated with the bodywork, at least part of the transverse connector (9) being held in front of the top edge (12) of the receiving part (8) in the direction of travel (F) when the roof is in the raised position.

9. Convertible vehicle according to one of claims 1 to 8, **characterised in that** the tensioning bow or bows (4) are connected to lateral control rods (14) which are freely held by a fixed mounting.

10. Convertible vehicle according to claim 9, **characterised in that**, to impart the pivoting movement, the control rod (14) is connected, via an intermediate link (15), to a part (17) of the roof-frame which is able to pivot relative to a lateral main mounting (18).

11. Convertible vehicle according to either of claims 9 and 10, **characterised in that**, to impart the reciprocating movement, the control rod (14) is mounted in a slotted guide (23).

## Revendications

1. Véhicule cabriolet (1) avec un toit repliable (2) qui, en position ouverte, peut être déposé en dessous d'un couvercle, et qui présente au moins un arceau de tension arrière (4) reposant sur le couvercle quand le toit est fermé,
**caractérisé en ce que**
le mouvement d'ouverture de toit (2) comprend un mouvement combiné de levage et de basculement de l'arceau de tension (4) le long d'une trajectoire (13) présentant des composantes d'élévation et d'abaissement auxquelles sont superposées des composantes de basculement.

2. Véhicule cabriolet selon la revendication 1,
**caractérisé en ce que**
la trajectoire (13) présente des composantes d'élévation, d'abaissement et de basculement dans sa partie située en avant par rapport au sens de déplacement du véhicule.

3. Véhicule cabriolet selon la revendication 1 ou 2,
**caractérisé en ce que**
l'arceau de tension (4) vu de dessus a une forme essentiellement triangulaire.

4. Véhicule cabriolet selon une des revendications 1 à 3,
**caractérisé en ce que**
les arceaux de tension (4) sont reliés entre eux par une attache transversale (9).

5. Véhicule cabriolet selon la revendication 4,
**caractérisé en ce que**
les arceaux de tension (4) sont solidaires de l'attache transversale (9) qui est guidée sur la trajectoire (13).

6. Véhicule cabriolet selon la revendication 4 ou 5,
**caractérisé en ce qu'**
une lunette arrière (6) est disposée devant ou entre les arceaux de tension (4).

7. Véhicule cabriolet selon la revendication 6,
**caractérisé en ce que**
l'attache transversale, quand le toit est en position de fermeture, est maintenue en dessous du couvercle (5).

8. Véhicule cabriolet selon la revendication 6 ou 7,
**caractérisé en ce que**
la lunette arrière (6), quand le toit (2) est en position de fermeture, peut être amenée dans une position abaissée ouverte où elle est logée dans une partie d'accueil (8) ayant la forme d'un caisson situé du côté de la carrosserie, et l'attache transversale (9), quand le toit est en position de fermeture, est maintenu au moins en partie, par rapport au sens de déplacement (F), devant le bord supérieur (12) de la partie d'accueil (8).

9. Véhicule cabriolet selon une des revendications précédentes,
**caractérisé en ce que**
le ou les arceaux de tension (4) sont reliés à des tiges latérales de commande (14) qui sont maintenues sans être positionnées en un point de montage fixe.

10. Véhicule cabriolet selon la revendication 9,
**caractérisé en ce que**
la tige de commande (14), pour transmettre le mouvement de basculement, est reliée par un bras intermédiaire (15) à une partie de cadre de toit (17) pouvant basculer par rapport à un palier principal latéral (18).

11. Véhicule cabriolet selon la revendication 9 ou 10,
**caractérisé en ce que**
la tige de commande (14), pour transmettre le mouvement de poussée, est montée dans un trou allongé de guidage coulissant (23).
